# EUROPEAN PATENT APPLICATION

(11) **EP 4 603 468 A1**
(43) Date of publication of application: **20.08.2025**
(21) Application number: 25158539.4
(22) Date of filing: 18.02.2025
(51) Int. Cl.: C04B 37/02

(54) **MICRO-SCALE DIFFUSION BONDING OF AN OPTICALLY TRANSPARENT CERAMIC TO A CONDUCTIVE METAL**

(30) Priority: 19.02.2024 US 202463555156 P; 21.06.2024 US 202463662621 P; 14.02.2025 US 202519053912
(71) Applicant: Greatbatch Ltd., Clarence, NY 14031 (US)
(72) Inventor: RUBINO, Robert, Williamsville, 14221 (US); GANGULY, Adrish, Clarence, 14031 (US); KOCH, Melissa, Spencerport, 14559 (US); ZHOU, Boyang, Buffalo, 14215 (US)
(74) Representative: Mathys & Squire

(57) **Abstract**

A kinetically limited micro-scale diffusion bond between sapphire as an optically transparent insulating ceramic and titanium as an opaque conductive metal is provided. The diffusion bond is formed using an electromagnetic beam emanating from a Gaussian-Bessel laser. The micro-scale diffusion bond has a thickness that is greater than 1 micron, and preferably greater than 4 microns, with a weld width that is greater than 45 microns. Importantly, the diffusion bond is spaced from and intermediate undisturbed portions of the optically transparent ceramic and the opaque conductive metal.

## Description

### CROSS-REFERENCE TO RELATED APPLICATIONS

This application claims priority to U.S. Provisional Application Serial Nos. 63/555,156, filed on February 19, 2024, and 63/662,621, filed on June 21, 2024.

### FIELD OF THE INVENTION

The present invention generally relates to the field of micro-scale diffusion bonding of dissimilar materials. More particularly, the present invention relates to micro-scale diffusion bonding an optically transparent insulating ceramic to an opaque metallic conducting material such as a conductive metal. Single crystalline Al₂O₃ (sapphire) is a preferred optically transparent ceramic and titanium is a preferred conductive metal. A Gaussian-Bessel pulsed laser beam may be used to affect the micro-scale diffusion bond between the dissimilar materials.

### BACKGROUND OF THE INVENTION

The formation of a bond between bulk materials with dissimilar properties has potential applications in many industries. For example, in the semiconductor industry, the ability to bond an insulating material to a conducting material is highly desired. Further, forming a bond between FDA approved biocompatible materials such as optically transparent, insulating, single crystalline Al₂O₃ (common name: sapphire) and conductive titanium or titanium alloys has multiple applications including formation of the housing for an implantable or a non-implantable medical or photonic device, in jewelry manufacturing, and for the inclusion of an optically transparent sapphire window in a titanium housing for optical sensing devices.

U.S. Patent No. 10,124,559 to Sandlin et al. describes the creation of a nano-scale diffusion bond having a thickness that is less than 1,000 nm or 1 micron between sapphire as an optically transparent ceramic and titanium as an opaque conductive metal. The diffusion bond is created using a laser pulse in the 5 µm to 15 µm range, a laser spot size of around 10 microns, an overlap in the range of 1-10%, a frequency in the range of 1 kHz to 80 kHz, a pulse energy of 1 µJ to 5 µJ with the electromagnetic beam being moved relative to the titanium-sapphire bulk materials at a rate of 5 mm/s-600 mm/s. Preferably, the laser produces a UV 355 nm-IR 1064 wavelength, has an average power of 2.1 mW-100 mW, and a repetition rate (frequency of pulses) of about 1 kHz to create a uniform and continuous bond having a thickness less than 1,000 nm between the sapphire and titanium.

Interestingly, the Sandlin et al. patent relates that increasing the laser pulse energy to 2.5 µJ and above while keeping the other parameters discussed above resulted in a bond with visible cracking. However, with the laser pulse energy being less than 2.0 µJ, a bond did not form. Additionally, the Sandlin et al. patent discusses that other wavelengths across the entire UV, visible and infrared spectra can be used. For example, a laser with a wavelength of 532 nm, a pulse energy of 1 uJ, a spot size of 10 µm, a pulse frequency of 1 kHz, and a pulse overlap of 50% can be used to achieve the desired less than 1,000 nm diffusion bond.

While the creation of a diffusion bond having a thickness that is less than 1,000 nm is sufficient to connect the dissimilar sapphire and titanium bulk materials together, there is a need to produce a diffusion bond with increased strength and hermeticity. That is particularly the case when the diffusion bond between sapphire and titanium is intended for incorporation into the housing of an implantable or a non-implantable medical or photonic device, and for inclusion of an optically transparent sapphire window in a titanium housing for an optical sensing device, and for jewelry manufacturing.

As will become apart to those skilled in the art after having read the detailed description in light of the appended drawings, the present invention accomplishes those goals.

### SUMMARY OF THE INVENTION

Aspects and embodiments of the present invention are set out in the appended claims.

In one embodiment of the present invention, a kinetically limited micro-scale diffusion bond having a thickness greater than about 1 micron, and preferably greater than 4 microns connects dissimilar bulk materials together. The bulk materials include an optically transparent insulating ceramic, an opaque conductive metal, and a kinetically limited micro-scale diffusion bond connecting the two materials together. The optically transparent ceramic has properties that allow an electromagnetic beam of a select wavelength to pass there through without more than minimal energy absorption. The opaque conductive metal has properties that significantly absorb energy from the electromagnetic beam. The micro-scale diffusion bond is formed by the electromagnetic beam bonding the optically transparent ceramic to the opaque conductive metal. Moreover, the micro-scale diffusion bond may have a weld width that is greater than 45 microns with a weld penetration or thickness that is greater than 1 micron.

In yet another embodiment, a kinetically limited micro-scale diffusion bond having a thickness that is greater than about 4 microns connects dissimilar bulk materials together. In this embodiment, the bulk materials having the kinetically limited micro-scale diffusion bond include an optically transparent ceramic, an undisturbed portion of the optically transparent ceramic, an opaque conductive metal, undisturbed portion of the opaque conductive metal, and an interfacial diffusion bond connecting the optically transparent ceramic to the opaque conductive metal. The interfacial diffusion bond is spaced from and intermediate the undisturbed portions of the optically transparent ceramic and the opaque conductive metal.

The optically transparent ceramic has properties that allow an electromagnetic beam of a select wavelength to pass there through without more than minimal energy absorption. The opaque conductive metal has properties that significantly absorb energy from the electromagnetic beam. The bond is formed by the electromagnetic beam bonding the optically transparent ceramic to the opaque conductive metal. The interfacial diffusion bond has a thickness that is greater than 1 micron, and more preferably that is greater than 4 microns. Preferably, the diffusion bond also has a weld width that is greater than 45 microns. Undisturbed optically transparent ceramic and undisturbed absorbent material is spaced outwardly from the greater than 1 micron diffusion bond, and preferably greater than 4 microns diffusion bond. Importantly, the undisturbed portions of the optically transparent ceramic and opaque conductive metal are not affected by formation of the bond.

In still another embodiment, a method of forming a kinetically limited micro-scale diffusion bond having a thickness greater than about 1 micron, and preferably greater than 4 microns is provided. The method includes positioning a first surface to be bonded of an optically transparent ceramic against a second surface to be bonded of an opaque conductive metal. The optically transparent ceramic has properties that allow an electromagnetic beam of a select wavelength and pulse duration to pass there through without more than minimal energy absorption and the opaque conductive metal has properties that significantly absorb energy from the electromagnetic beam. Pressure on the optically transparent ceramic and the opaque conductive metal is then applied so that the first surface of the optically transparent ceramic is in direct contact with the second surface of the opaque conductive metal. A Gaussian-Bessel electromagnetic beam is then selectively passed through the optically transparent ceramic and directed to the second surface of the opaque conductive metal. The Gaussian-Bessel electromagnetic beam then creates a kinetically limited micro-scale diffusion bond having a thickness greater that is than about 1 micron, and that is preferably greater than about 4 microns between the optically transparent ceramic and the opaque conductive metal.

These and other aspects of the present invention will become increasingly more apparent to those skilled in the art by reference to the following detailed description and to the appended drawings.

### BRIEF DESCRIPTION OF THE DRAWINGS

FIG. 1 is a schematic illustration of the formation of a micro-scale diffusion bond according to one embodiment of the present invention.
FIG. 2 is a titanium preparation flow diagram 100 of one embodiment according to the present invention.
FIG. 3 is a sapphire preparation flow diagram 200 of one embodiment according to the present invention.
FIG. 4 is a flow diagram 300 illustrating the steps for micro-scale diffusion bonding a sapphire wafer 12 and a titanium plate 14 according to the present invention.
FIG. 5 is illustrates the assembly of a stack comprising a sapphire wafer 12 and a titanium plate 14 between a holding fixture 400 and a sealing cover 404 prior to diffusion bonding according to the present invention.
FIG. 6 is a plan view of three circular weld paths 504, 506 and 508 forming a micro-scale diffusion bonded hermetic seal between sapphire and titanium according to the present invention.
FIG. 7 is a plan view of three rectangularly-shaped weld paths 604, 606 and 608 forming a micro-scale diffusion bonded hermetic seal between sapphire and titanium according to the present invention.
FIG. 8 is a plan view of three oval-shaped weld paths 704, 706 and 708 forming a micro-scale diffusion bonded hermetic seal between sapphire and titanium according to the present invention.
FIG. 9 is an optical microscope image of a bonded titanium-sapphire assembly where the beam of EM radiation has formed three separate weld/bonding paths, each having a weld width of at least 45 microns.
FIG. 10 is a cross-sectional scanning electron microscope (SEM) image of a micro-scale diffusion bond that is greater than 1 micron thick of a titanium-sapphire assembly according to the present invention.
FIG. 11 is a cross-sectional scanning electron microscope (SEM) image of a micro-scale diffusion bond that is greater than 2 microns thick of a titanium-sapphire assembly with the sapphire and titanium immediately surrounding the diffusion bond remaining undisturbed.

### DETAILED DESCRIPTION OF THE PREFERRED EMBODIMENTS

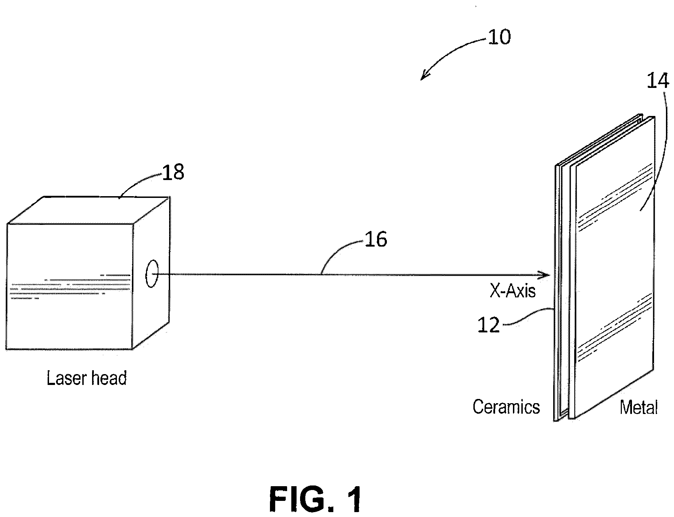

In this specification, the term "diffusion bond thickness" is measured from a plane aligned along the contact interface between a sapphire wafer and a titanium plate and includes the combined depth of the bond extending outwardly from that plane along an x-axis (see FIG. 1) into undisturbed portions of both the sapphire and the titanium.

The term "weld width" is defined as the lateral extent along a y-axis (perpendicular to the x-axis indicated in FIG. 1) of the diffusion bond perpendicular to the diffusion bond thickness and which is bordered by opposed undisturbed portions of sapphire and titanium.

A Bessel beam is a wave whose amplitude is described by a Bessel function of the first kind. Electromagnetic, acoustic, and matter waves can all be in the form of a Bessel beam. A Bessel beam is non-diffractive within a specific range, known as "depth of field" or "Bessel zone" in the literature. In the specific range, as it propagates, the beam does not diffract and spread out. This is in contrast to the usual behavior of light (or sound), which spreads out after being focused down to a small spot. Reasonably good approximations can be made, however, and these are important in many optical applications because they exhibit little or no diffraction over a limited distance. Approximations to Bessel beams are made in practice either by focusing a Gaussian beam with an axicon lens to generate a Gaussian-Bessel beam, by using axisymmetric diffraction gratings, or by placing a narrow annular aperture in the far field.

Turning now to the drawings, FIG. 1 illustrates a system 10 according to the present invention for micro-scale diffusion bonding of dissimilar bulk materials using perpendicularly incident electromagnetic (EM) radiation, for example, a Gaussian-Bessel laser beam, at room temperature. The bulk materials being micro-scale diffusion bonded include an optically transparent ceramic 12 (insulator) and an electrically conductive and opaque metallic material 14 (metal). The optically transparent ceramic 12 is at least partially transparent to the wavelength of a laser beam 16, and preferably a Gaussian-Bessel beam, emitted from a laser head 18. The optically transparent ceramic 12 has properties that allow the laser beam 16 to pass there through with nothing more than minimal light reflection at its front surface. In embodiments, a micro-scale diffusion bond having a thickness that is greater than 1 micron, and preferably that is greater than about 4 microns, is created to bond the dissimilar bulk material together.

The optically transparent material 12 and the optically absorbent material 14 absorb and interact with the energy of the Gaussian-Bessel laser beam 16 within the Bessel zone so that an interfacial bond (not shown in FIG. 1) is created between the bulk materials 12 and 14 by diffusion of the optically transparent ceramic 12 into the opaque conductive metal 14, by diffusion of the opaque conductive metal 14 into the optically transparent ceramic 12, and by diffusion of both materials into each other. Exemplary optically transparent ceramics 12 include polycrystalline or single crystal materials such as, but not limited to, sapphire and quartz. Other exemplary optically transparent materials that are useful with the present invention include, but are not limited to, glass, zirconia, diamond, metal oxides and corundum variations.

Suitable optically absorbent materials 14 includes metals such as, but not limited to, titanium, or an alloy of titanium. The energy passing through the optically transparent ceramic 12 outside the Bessel zone to interact with the optically absorbent material 14 and form the desired micro-scale diffusion bond generally needs to meet the following requirements: 1) the energy transmitted through the optically transparent ceramic 12 must be sufficient to activate the transparent ceramic 12 and bonding process at the interface via absorption by the opaque conductive metal 14 within the Bessel zone (the laser will not be absorbed and interact with the ceramic and metal until it gets into the Bessel zone because the laser intensity is only strong enough within this zone to generate a sufficiently strong absorption), and simultaneously 2) any energy absorbed by the optically transparent ceramic 12 must not be sufficient to melt, distort, or otherwise affect the bulk of the optically transparent ceramic 12 spaced outwardly from the bond interface.

The micro-scale diffusion bond has an interfacial toughness (strength) that is similar or equivalent to the strength of at least one of the bulk materials 12 and 14. Moreover, the micro-scale diffusion bond does not contain cracks or imperfections that are large enough to reduce the measured fracture toughness of the diffusion bond to a degree below that of the bulk fracture toughness of the optically transparent ceramic. Desirably, the micro-scale diffusion bond is generally continuous, uniform, and crack free. Importantly, the micro-scale diffusion bond provides a hermetic seal between the bulk materials that is corrosion resistant and bio-stable. Moreover, the diffusion bond is a relatively thin interface in the micro-scale range due to a short heating time. With the use of select materials and the short local bonding time and absence of bulk heating, the formation of undesirable compounds at or near the interface that could weaken the micro-scale diffusion bond are minimized or eliminated.

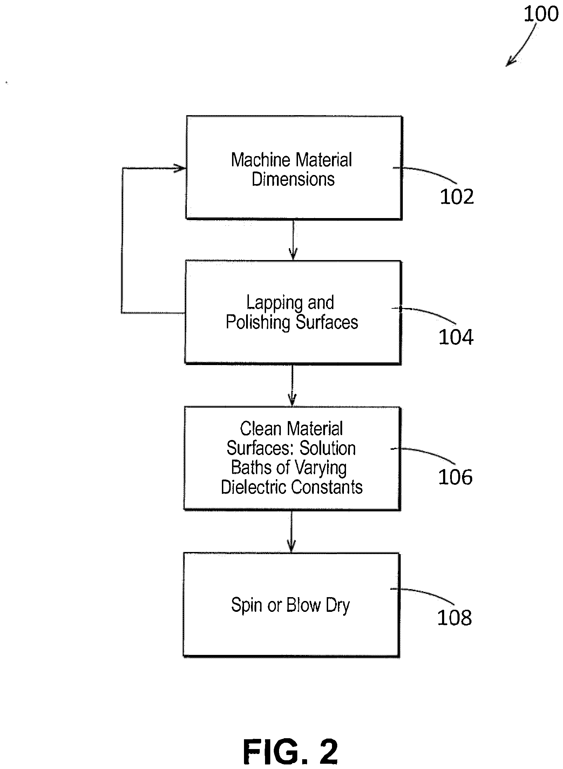

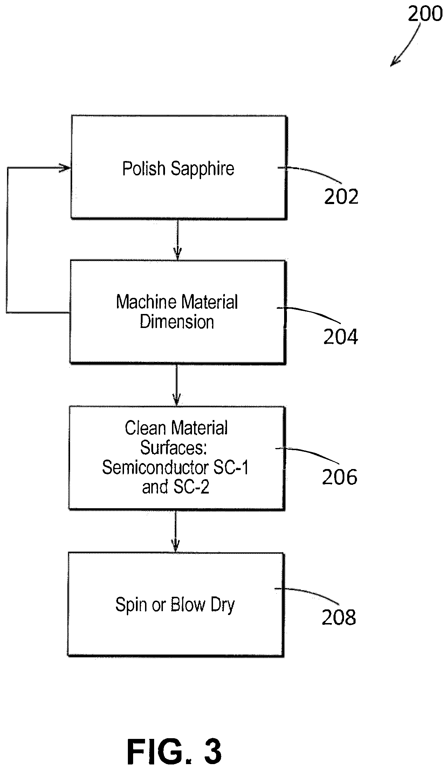

Prior to micro-scale diffusion bonding the dissimilar bulk materials 12, 14 using the Gaussian-Bessel laser beam 16 with the system 10 depicted in FIG. 1, the bulk materials are processed to prepare them to be bonded together. Preparation of the bulk materials 12, 14 in the titanium-sapphire example is provided in the titanium preparation flow diagram 100 in FIG. 2 and the sapphire preparation flow diagram 200 in FIG. 3.

Regarding titanium, a titanium plate 14 (FIG. 1) of a suitable grade is first selected. In step 102, the titanium plate 14 is machined to form two planar parallel surfaces. One of the planar surfaces will be micro-scale diffusion bonded to the sapphire and the other provides a relatively flat surface upon which a pressure can be applied. In an alternate embodiment, only one surface of the titanium plate is machined planar. A conforming fixture will provide a relatively uniform surface to which pressure to the second side of the titanium plate can be applied.

To improve surface quality, in step 104, a lapping and polishing process is applied to at least one of the planar surfaces of the titanium plate 14 to be bonded to the sapphire. Lapping includes the use of a combination of Blanchard grinding and a 12 µm diameter aluminum oxide (Al₂O₃) slurry (alumina slurry). In an alternate embodiment to improve surface quality, the bonding surface of the titanium plate 14 is polished in a two-step process. The first polishing step uses a mixture of a 1.5 µm diamond slurry. The second and final polishing step uses a 0.5 µm diamond slurry.

Regardless the lapping and polishing process used, flatness or planarity in the sub-micron range is desirable to ensure intimate contact of the surfaces to be bonded when they are mated. A smooth, scratch free surface with a roughness (Ra) of less than 60 nm is desirable to ensure intimate contact at the titanium-sapphire interface during micro-scale diffusion bonding. However, a hermetic micro-scale diffusion bond can be achieved with a roughness up to 200 nm or greater.

As depicted in step 106 of the flow diagram in FIG. 2, once the desired material dimensions and surface quality are obtained, the titanium plate 14 is cleaned. In one embodiment, the titanium is washed with soapy water and then rinsed with deionized water. In other embodiments, the titanium plate 14 is subjected to a series of solution baths of increasing dielectric constant. One such embodiment subjects the titanium plate 14 to baths of hexanes, acetone, ethanol, and then deionized water. As depicted in step 108, after the titanium plate 14 is cleaned, it is spun or blown dry. Importantly, wiping the prepared titanium plate 14 is avoided.

Regarding sapphire, in step 202 of the flow diagram in FIG. 3, the sapphire wafer 12 is first polished. In step 204, the polished sapphire wafer 12 is then diced to size, as required. If desired, the sapphire wafer 12 is sent back to step 202 for further polishing before again moving to step 204 for machining to a desired dimension.

As depicted in step 206 of the flow diagram in FIG. 3, once the desired material dimensions and surface quality are obtained, the sapphire wafer 12 is cleaned in a series of solution baths of increasing dielectric constant. One such embodiment subjects the sapphire wafer 12 to baths of hexanes, acetone, ethanol, and then deionized water. In other embodiments, the sapphire wafer 12 is subjected to standard semiconductor cleaning processes. One such embodiment subjects the sapphire wafer 12 to chemical baths referred to in the industry as Standard Clean 1 (SC-1) and Standard Clean 2 (SC-2) before rinsing with deionized water. As depicted in step 208, after the sapphire wafer 12 is cleaned in an embodiment, it is spun or blown dry. Importantly, wiping the prepared sapphire wafer 12 is avoided.

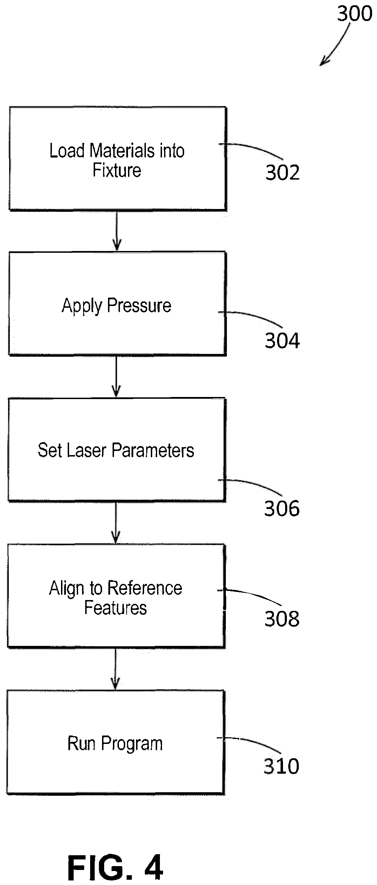

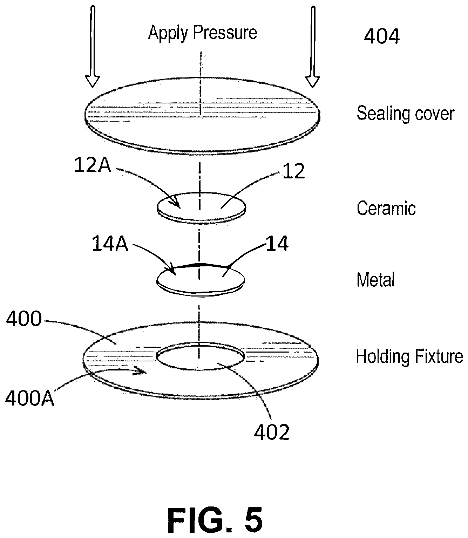

As shown in the flow diagram 300 in FIG. 4, after the sapphire wafer 12 and the titanium plate 14 have been prepared for micro-scale diffusion bonding, they are loaded into a holding fixture in step 302. FIG. 5 illustrates the holding fixture as a plate-shaped member 400 having a central recess 402. The central recess 402 is sized and shaped to receive the prepared titanium plate 14. Preferably, the recess 402 is only slightly larger in diameter than the perimeter of the titanium plate 14 so that the plate 14 is prevented from moving along an x-axis or a y-axis with respect to the fixture 400. Moreover, with the titanium plate 14 received in the fixture recess 402, the upper surface 400A of the fixture 400 is spaced a very short distance below the upper surface 14A of the titanium plate 14. The sapphire wafer 12 is then moved into a stacked position contacting the upper surface 14A of the titanium plate 14, and an optically transparent sealing cover 404 is moved into direct contact with an upper surface 12A of the sapphire wafer 12.

As depicted in step 304 of the flow diagram in FIG. 4, once the titanium plate 14 and the sapphire wafer 12 are properly positioned in the holding fixture 400 with the desired bonding surfaces in direct contact with each other and with the optically transparent sealing cover 404 directly contacting the sapphire wafer 12, an external pressure is applied to the stack. This external pressure increases the intimacy and uniformity of contact between the titanium and sapphire surfaces. The magnitude of pressure needed to form a micro-scale diffusion bond is at least partially dependent on the chemical composition of the materials to be bonded, the size and shape of the materials to be bonded, and the surface quality of the materials to be bonded. Once the titanium and sapphire have been properly stacked in the holding fixture and external pressure has been applied to the stack, the laser parameters may be set. This is depicted in step 306 of the flow diagram in FIG. 4.

As illustrated in FIG. 1, a Gaussian-Bessel beam 16 of electromagnetic (EM) radiation emanating from a laser head 18 is directed through the optically transparent sealing cover (not shown in FIG. 1) and the sapphire wafer 12 to the interface between the sapphire and titanium materials, preferably at room temperature. In one embodiment according to the present invention, the laser bonding parameters for the use of a Gaussian-Bessel beam to diffusion bond the sapphire and titanium materials together include a bonding pressure ranging from about 5 psi to about 30 psi, a pulse beam wavelength of about 1,030 nm in the near infrared range, a pulse energy of about 16 µJ, a pulse duration (width) of about 400 femtoseconds (fs), a pulse frequency of about 400kHz, a laser beam spot size of about 2 µm, and the speed of laser movement ranges from about 5 mm/sec. to about 600 mm/sec. However, it is within the scope of the present invention that selecting a specific unique value for one parameter will result in a specific unique value for another parameter. Selection of a different set of specific unique values may form a resulting micro-scale diffusion bond that is statistically identical in observable properties. Accordingly, the invention is not limited to specific parameters.

Once the operating laser parameters are set in step 306 of the flow diagram in FIG. 4, the Gaussian-Bessel laser is aligned to reference features in step 308. In one embodiment, the reference features refer only to an edge or 90° corner of the stacked sapphire and titanium materials. In another embodiment, the reference features refer to a geometric shape inscribed on the sapphire and titanium bonding surfaces. As depicted in step 310 of the flow diagram in FIG. 4, a program is then run by a controller connected to the laser head 18 to activate the Gaussian-Bessel beam 16 of EM radiation and enable the motorized stage which either moves the holding fixture 400 or the laser head 18 along the desired bonding path in the x, y, and z directions.

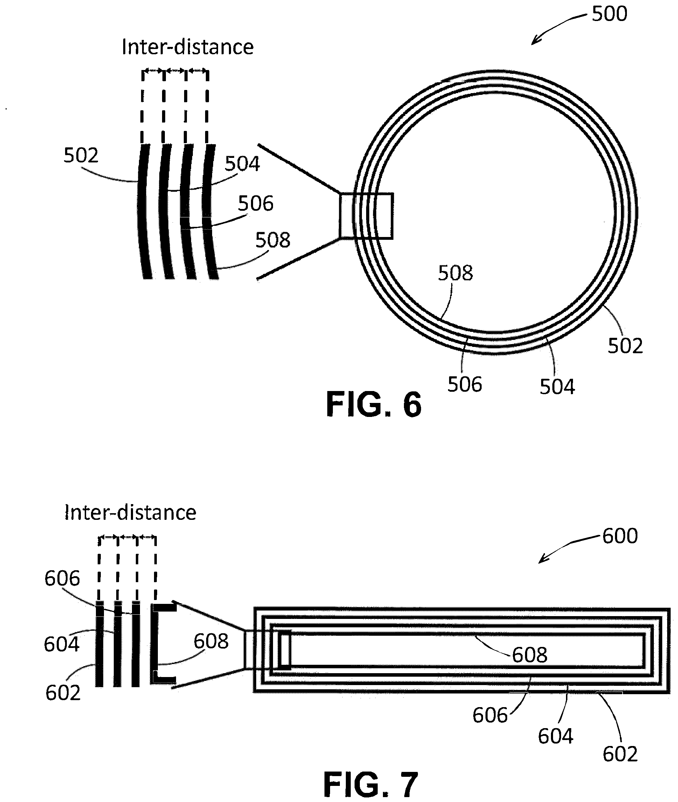

Figure 6 illustrates one exemplary diffusion bond pattern according to the present invention. In this drawing, the outer edge of the stacked assembly 500 comprising the sapphire wafer 12 and titanium plate 14 is indicated by numerical designation 502. There are three concentric circularly-shaped weld paths forming diffusion bonds 504, 506 and 508 of increasingly lesser diameters forming a diffusion bond pattern hermetically sealing the sapphire wafer 12 to the titanium plate 14. The resulting diffusion bonds 504, 506 and 508 each have a weld width that ranges from about 45 microns to as large as 200 microns with a weld penetration or thickness that ranges from about 1 micron to about 10 microns. The diffusion bonds do not contain cracks or imperfections large enough to observe with an optical microscope. The distance between the outer edge 502 of the stacked assembly 500 and the outer-most weld path 504 ranges from about 100 µm to about 1,000 µm, and the distance between the respective diffusion bonds 504, 506 and 508 ranges from about 100 µm to about 500 µm.

Figure 7 illustrates another exemplary diffusion bond pattern according to the present invention. In this drawing, the outer edge of the stacked assembly 600 comprising the sapphire wafer 12 and titanium plate 14 is indicated by numerical designation 602. There are three rectangularly-shaped weld paths forming diffusion bonds 604, 606 and 608 of increasingly lesser diameters forming a diffusion bond pattern hermetically sealing the sapphire wafer 12 to the titanium plate 14. The resulting diffusion bonds 604, 606 and 608 each have a weld width that ranges from about 45 microns to as large as 200 microns with a weld penetration or thickness that ranges from about 1 micron to about 10 microns. The diffusion bonds do not contain cracks or imperfections large enough to observe with an optical microscope. The distance between the outer edge 602 of the stacked assembly 600 and the outer-most weld path 604 ranges from about 100 µm to about 1,000 µm, and the distance between the respective diffusion bonds 604, 606 and 608 ranges from about 100 µm to about 500 µm.

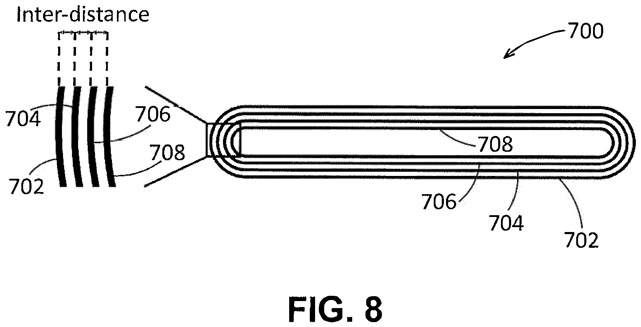

Further, FIG. 8 illustrates another exemplary diffusion bond pattern according to the present invention. In this drawing, the outer edge of the stacked assembly 700 comprising the sapphire wafer 12 and titanium plate 14 is indicated by numerical designation 702. There are three elongate oval-shaped weld paths forming diffusion bonds 704, 706 and 708 of increasingly lesser diameters forming a diffusion bond pattern hermetically sealing the sapphire wafer 12 to the titanium plate 14. The resulting diffusion bonds 704, 706 and 708 each have a weld width that ranges from about 45 microns to as large as 200 microns with a weld penetration or thickness that ranges from about 1 micron to about 10 microns. The diffusion bonds do not contain cracks or imperfections large enough to observe with an optical microscope. The distance between the outer edge 702 of the stacked assembly 700 and the outer-most weld path 704 ranges from about 100 µm to about 1,000 µm, and the distance between the respective diffusion bonds 704, 706 and 708 ranges from about 100 µm to about 500 µm.

From the teachings of FIGs. 6 to 8, it is understood that diffusion bonds according to the present invention can have a myriad of different shapes and comprise from one to many more spaced-apart paths to hermetically bond the exemplary sapphire wafer 12 to the exemplary titanium plate 14. The number and shape of a diffusion bond according to the present invention is only limited by the application for which the bonded sapphire and titanium materials are intended.

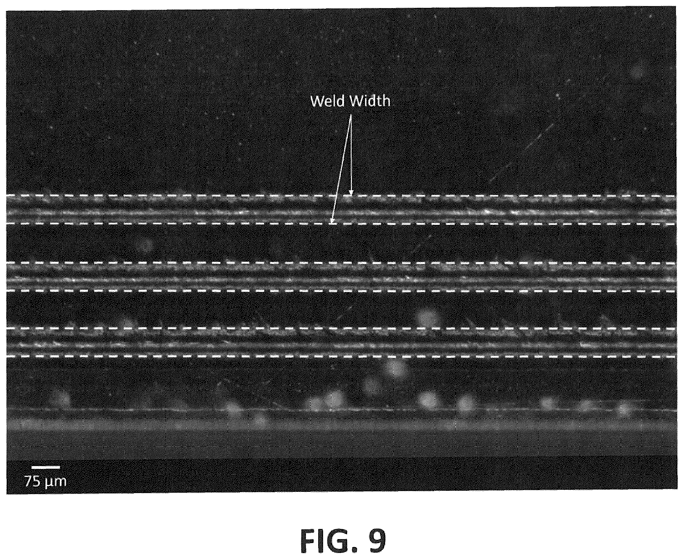

FIG. 9 depicts an optical microscope image of a bonded titanium-sapphire assembly wherein the beam of EM radiation from the Gaussian-Bessel laser formed three separate weld/bonding paths. The image in FIG. 9 is collected at a 90° incidence to the titanium-sapphire interface, observing the bonding paths through the sapphire component of the bonded assembly. As illustrated, each weld/bond formed as a result of EM radiation from the Gaussian-Bessel laser comprises three linear features: two semi-straight lines which blur or fuzz at intervals and border a third straight line. As illustrated in the titanium-sapphire example, the weld width across a single weld/bonding path is uniformly greater than 45 microns.

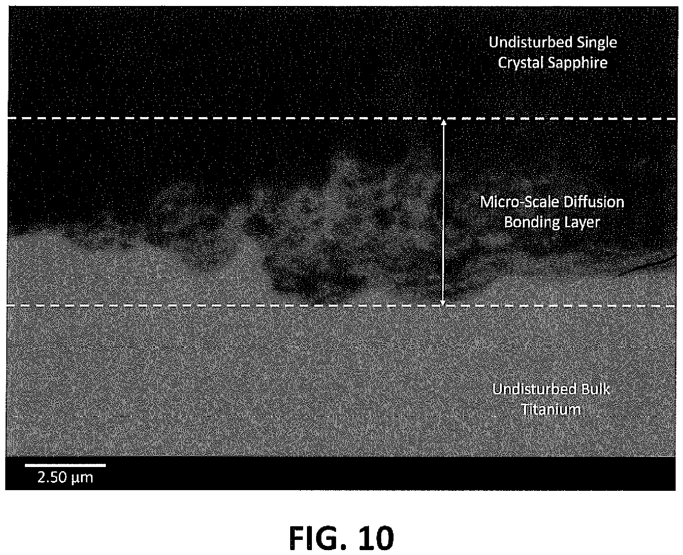

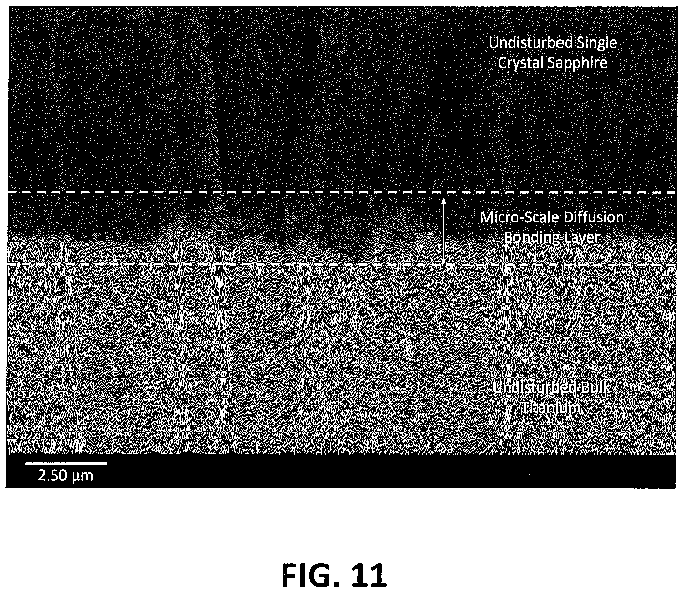

FIGs. 10 and 11 depict cross-sectional scanning electron microscope (SEM) image of a diffusion zone in a bonded titanium-sapphire assembly as formed using a Gaussian-Bessel laser programmed with the parameters discussed above. As a result of the beam of incident EM radiation, the titanium has diffused into the sapphire to form a diffusion zone as a plume or cloud-like insertion of titanium into the sapphire material that is greater than 1 microns thick. Particularly, the diffusion zone is about 6 microns thick in the image shown in FIG. 10 and about 2 microns thick in the image of FIG. 11. In the areas immediately surrounding the cloud-like diffusion layers, both the titanium and sapphire are undisturbed. That is, the formation of the diffusion bond, as described above, does not change the properties of the titanium and sapphire beyond the localized diffusion zone.

Thus, a micro-scale diffusion bond having a thickness that is greater than about 1 micron, and preferably greater than 4 microns, connecting an optically transparent insulating ceramic and an opaque conductive metal together has been described. The optically transparent ceramic allows an electromagnetic beam of a select wavelength from a Gaussian-Bessel laser to pass there through without more than minimal energy absorption. The opaque conductive metal significantly absorb energy from the electromagnetic beam. The micro-scale diffusion bond is formed by the electromagnetic beam bonding the optically transparent ceramic to the opaque conductive metal. Moreover, the micro-scale diffusion bond preferably has a weld width that is greater than about 45 microns.

It is appreciated that various modifications to the inventive concepts described herein may be apparent to those skilled in the art without departing from the spirit and scope of the present invention as defined by the hereinafter appended claims.

## Claims

1. A micro-scale diffusion bond, comprising:
a) an optically transparent ceramic comprising sapphire;
b) an opaque conductive metal comprising titanium; and
c) a micro-scale diffusion bond formed by the electromagnetic beam bonding the optically transparent ceramic to the opaque conductive metal, wherein the micro-scale diffusion bond has a thickness that is greater than 1 micron.

2. The micro-scale diffusion bond of claim 1, wherein the micro-scale diffusion bond has a weld width that is at least 45 microns, and wherein undisturbed portions of the optically transparent ceramic and the opaque conductive metal reside on opposed sides of the micro-scale diffusion bond having the thickness that is greater than 1 micron and the weld width of at least 45 microns along both an x-axis and a y-axis.

3. The micro-scale diffusion bond of claim 1 or claim 2, wherein the micro-scale diffusion bond has a thickness that is greater than 4 microns;
and optionally wherein the micro-scale diffusion bond has a weld width that is at least 45 microns, and wherein undisturbed portions of the optically transparent ceramic and the opaque conductive metal reside on opposed sides of the micro-scale diffusion bond having the thickness that is greater than 4 microns and the weld width of at least 45 microns along both an x-axis and a y-axis.

4. The micro-scale diffusion bond of any preceding claim, characterized as having been formed using a Gaussian-Bessel laser.

5. The micro-scale diffusion bond of any preceding claim forming a hermetic seal between the optically transparent ceramic and the opaque conductive metal.

6. The micro-scale diffusion bond of any preceding claim being at least one of corrosion-resistant, crack free, uniform, and bio-stable.

7. The micro-scale diffusion bond of any preceding claim, wherein the diffusion bond has a strength that is as strong as at least one of the optically transparent ceramic and the opaque conductive metal.

8. The micro-scale diffusion bond of any preceding claim, wherein a surface of the opaque conductive metal directly contacting the optically transparent ceramic has a roughness (Ra) of less than 60 nm.

9. A micro-scale diffusion bond, comprising:
a) an optically transparent ceramic comprising sapphire;
b) an opaque conductive metal comprising titanium;
c) a micro-scale diffusion bond formed by the electromagnetic beam bonding the optically transparent ceramic to the opaque conductive metal, wherein the micro-scale diffusion bond has a thickness that is greater than 1 micron and a weld width that is at least 45 microns; and
d) an undisturbed portion of the optically transparent ceramic and an undisturbed portion of the opaque conductive metal residing on opposed sides of the micro-scale diffusion bond having the thickness that is greater than 1 micron and the weld width of at least 45 microns along both an x-axis and a y-axis,
wherein the micro-scale diffusion bond optionally has the features of any of claims 3-8.

10. A method for forming a micro-scale diffusion bond, comprising the steps of:
a) providing an optically transparent ceramic comprising sapphire;
b) providing an opaque conductive metal comprising titanium;
c) positioning a first surface of the optically transparent ceramic comprising sapphire in direct contact with a second surface of the opaque conductive metal comprising titanium to form an optically transparent ceramic/opaque conductive metal stack;
d) applying pressure to the optically transparent ceramic/opaque conductive metal stack;
e) passing an electromagnetic beam through the optically transparent ceramic to the second surface of the opaque conductive metal using a Gaussian-Bessel laser, thereby creating a micro-scale diffusion bond having a thickness that is greater than 1 micron.

11. The method of claim 10, including creating the micro-scale diffusion bond without disturbed the optically transparent ceramic and the opaque conductive metal on opposed sides of the micro-scale diffusion bond having the thickness that is greater than 1 micron.

12. The method of claim 10 or claim 11, including creating the micro-scale diffusion bond having a thickness that is greater than 4 microns and a weld width of at least 45 microns.

13. The method of any of claims 10 to 12, including forming the micro-scale diffusion bond as a first weld path that is spaced inwardly from about 100 µm to about 1,000 µm from an outer edge of the optically transparent ceramic/opaque conductive metal stack, and preferably forming the micro-scale diffusion bond as a second weld path that is spaced inwardly from the first weld path by a distance that ranges from about 100 µm to about 500 µm.

14. The method of any of claims 10 to 13, including providing the second surface of the opaque conductive metal contacting the first surface of the optically transparent ceramic having a roughness (Ra) of less than 60 nm.

15. The method of any of claims 10 to 14, including passing the electromagnetic beam through the optically transparent ceramic to the second surface of the opaque conductive metal at a 90° angle to the first surface of the optically transparent ceramic.
